# EUROPÄISCHE PATENTSCHRIFT

(11) **EP 0 975 908 B1**
(45) Veröffentlichungstag und Bekanntmachung des Hinweises auf die Patenterteilung: **29.08.2001**
(21) Anmeldenummer: 98919145.7
(22) Anmeldetag: 25.03.1998
(51) Int. Cl.: F16L 3/10, F16L 55/033

(54) **ROHRSCHELLE**
PIPE CLAMP
COLLIER DE SERRAGE POUR TUYAU

(30) Priorität: 21.04.1997 DE 19716632
(43) Veröffentlichungstag der Anmeldung: 02.02.2000
(73) Patentinhaber: fischerwerke Artur Fischer GmbH & Co. KG, 72178 Waldachtal (DE)
(72) Erfinder: THOMMA, Leonhard, D-72108 Rottenburg (DE)
(86) Internationale Anmeldenummer: EP9801740
(87) Internationale Veröffentlichungsnummer: WO9848206

(56) Entgegenhaltungen:
- EP-A- 0 597 193
- DE-A- 19 503 737
- DE-U- 29 616 412

## Beschreibung

Die Erfindung betrifft eine Rohrschelle mit den Merkmalen des Oberbegriffs des Anspruchs 1.

Derartige Rohrschellen dienen zum Befestigen von beispielsweise Wasserrohren an einer Wand oder Decke. Sie weisen einen ein eingelegtes Rohr umschließenden Schellenring auf. Dieser kann einstückig sein und sich zum Einlegen des Rohres elastisch und/oder plastisch aufweiten lassen. Auch kann der Schellenring zwei- oder mehrstückig aus Schellenbügeln zusammengesetzt sein, die an einer Stelle des Umfangs des Schellenrings gelenkig miteinander verbunden sind. Mit Abstand von der gelenkigen Verbindungsstelle bzw. beim einstückigen Schellenring an einer Stelle des Umfangs weist der Schellenring eine Öffnung zum Einlegen des Rohres auf, die mit einer Spannschraube verschließbar ist, mit der sich das Rohr in der Rohrschelle festspannen läßt.

Aus der DE 43 27 859 C1 ist eine solche Rohrschelle bekannt, deren Schellenring zur Vereinfachung der Befestigung des Rohres zwei in etwa radial nach außen stehende Spannflansche beiderseits der Öffnung zum Einlegen des Rohres aufweist, die von der Spannschraube durchgriffen und mit der Spannschraube zusammenspannbar sind. Einer der beiden Spannflansche weist einen einseitig offenen Schlitz auf, in den die Spannschraube mit ihrer Kopfseite hineinverschwenkbar ist. Mit ihrem kopfabgewandten, ein Gewinde tragenden Schaftende ist die Spannschraube in ein Gewindeelement eingeschraubt, das schwenkbar auf einer dem einen Spannflansch abgewandten Seite des anderen Spannflansches angebracht ist. Zum schwenkbaren Verbinden mit dem Schellenring weist das Gewindeelement drei nebeneinander angeordnete Fortsätze auf, deren mittlerer einen Durchbruch des Schellenrings durchgreift und deren beide äußere abgewinkelt sind und sich auf einer Außenseite des Schellenrings befinden. Nach Einlegen des Rohres in die geöffnete Rohrschelle werden die beiden Spannflansche durch Zusammendrücken des Schellenrings in seine Öffnung verkleinernder Weise auf einander zu bewegt und die Spannschraube in den Schlitz im einen Spannflansch geschwenkt. Die Rohrschelle ist provisorisch geschlossen und hält das eingelegte Rohr. Durch Anziehen der Spannschraube wird die Rohrschelle festgespannt. Der andere Spannflansch ist mit einem Loch versehen, dessen Abmessung in Schwenkrichtung der Spannschraube so groß ist, daß er das Verschwenken der Spannschraube zuläßt Das Gewindeelement kann beispielsweise ein Blech mit einer Gewindebohrung oder eine schwenkbar am anderen Spannflansch angebrachte Mutter sein.

Um das Schließen der Rohrschelle zu vereinfachen, ist in der genannten Druckschrift ein Spannband, beispielsweise ein Gummiring, vorgesehen, der das Gewindeelement und den anderen Spannflansch umschließt und auf diese Weise das Gewindeelement elastisch in Anlage an die dem einen Spannflansch abgewandte Seite des anderen Spannflansches drückt. Werden die beiden Spannflansche zum Schließen der Rohrschelle auf einander zu bewegt, drückt der eine Spannflansch den Kopf der Spannschraube nach außen oder auch zur Seite in Richtung des offenen Endes des Schlitzes, d.h. die Spannschraube und das Gewindeelement werden verschwenkt. Sobald der Kopf der Spannschraube den einen Spannflansch überwunden hat, drückt das Spannband das Gewindeelement wieder gegen den anderen Spannflansch und verschwenkt dadurch das Gewindeelement und die Spannschraube so, daß die Spannschraube in den Schlitz schwenkt und den einen Spannflansch durchgreift. Die bekannte Rohrschelle wird also ausschließlich durch Zusammendrücken ihres Schellenrings provisorisch geschlossen, wobei das Spannband dafür sorgt, daß die Spannschraube in jeder räumlichen Lage der Rohrschelle von selbst in den einseitig offenen Schlitz im einen Spannflansch hineinverschwenkt.

Um einen unmittelbaren Kontakt zwischen dem Schellenring und einem eingelegten Rohr zu vermeiden, weist die bekannte Rohrschelle eine gummielastische Einlage auf einer Innenseite des Schellenrings auf, deren C-förmige Seitenränder den Schellenring seitlich umgreifen. Die C-förmigen Seitenränder bilden auf einer Außenseite des Schellenrings befindliche Abschnitte.

Aufgabe der Erfindung ist es, eine derartige Rohrschelle zu vereinfachen.

Diese Aufgabe wird erfindungsgemäß durch die Merkmale des Anspruchs 1 gelöst. Das Gewindeelement der erfindungsgemäßen Rohrschelle weist einen von ihm abgewinkelt abstehenden Fortsatz auf, der auf einer Außenseite des auf der Außenseite des Schellenrings befindlichen Abschnitts der Einlage anliegt. Der auf der Außenseite des Schellenrings befindliche Abschnitt kann beispielsweise durch Umlegen der Einlage um ein Ende des Schellenrings herum auf dessen Außenseite oder durch Durchführen eines Endes der Einlage durch einen Durchbruch im Schellenring auf dessen Außenseite gebildet sein. Insbesondere wird der auf der Außenseite des Schellenrings befindliche Abschnitt von C-förmigen Seitenrändern der Einlage gebildet, die den Schellenring seitlich umgreifen.

Der Fortsatz des Gewindeelements liegt also außen auf dem auf der Außenseite des Schellenrings befindlichen Abschnitt, insbesondere auf einem der C-förmigen Seitenränder der gummielastischen Einlage auf. Vorzugsweise weist das Gewindeelement zwei derartige Fortsätze an beiden Seiten auf, die außen auf den beiden C-förmigen Seitenrändern der gummielastischen Einlage anliegen. Wird das Gewindeelement zusammen mit der in es eingeschraubten Spannschraube beim Schließen des Schellenrings verschwenkt und dabei vom anderen Spannflansch abgehoben, drückt der C-förmige Seitenrand der gummielastischen Einlage aufgrund seiner Elastizität den Fortsatz federnd radial nach außen. Das Gewindeelement wird dadurch zurück in Richtung des anderen Spannflansches gedrückt, so daß die Spannschraube in den einseitig offenen Schlitz im einen Spannsflansch hinein verschwenkt, sobald der Kopf der Spannschraube den einen Spannflansch überwunden hat. Die Rohrschelle ist damit provisorisch geschlossen und kann anschließend durch Anziehen der Spannschraube festgespannt werden.

Die erfindungsgemäße Rohrschelle hat den Vorteil, daß ein Spannband oder ein sonstiges Federelement zum Andrücken des Gewindeelements an den anderen Spannflansch nicht notwendig ist. Dessen Funktion wird von der ohnehin vorhandenen gummielastischen Einlage übernommen. Die erfindungsgemäße Rohrschelle weist also ein Bauteil weniger auf. Weiterer Vorteil ist, daß damit der zusätzliche Arbeitsschritt des Anbringens des Spannbandes oder sonstigen Federelements entfällt, was das Zusammensetzen der erfindungsgemäßen Rohrschelle vereinfacht.

In bevorzugter Ausgestaltung weist die gummielastische Einlage im Querschnitt C-förmige Seitenränder zur Befestigung am Schellenring auf, die Seitenränder des Schellenrings umgreifen. Mit diesen C-förmigen Seitenrändern liegt die Einlage mit ihrem am anderen Spannflansch befindlichen Ende auf der Außenseite des Gewindeelements auf und drückt dieses in Anlage an den anderen Spannflansch. Dies hat den Vorteil, daß auf Länge abgeschnittene Meterware als Einlage verwendet werden kann.

Um das Verschwenken des Gewindeelements zu ermöglichen, weist der Schellenring bei einer bevorzugten Ausgestaltung der Erfindung einen Freiraum im Bereich des Fortsatzes des Gewindeelements auf. Der Freiraum kann beispielsweise als eine nach innen gewölbte Sicke des Schellenrings ausgebildet sein. Vorzugsweise wird der Freiraum durch eine Aussparung des Schellenrings gebildet. In diesen Freiraum drückt der Fortsatz beim Verschwenken des Gewindeelements den C-förmigen Seitenrand der gummielastischen Einlage. Bei größerem Schwenkwinkel kann der Fortsatz selbst ebenfalls in den Freiraum hinein gelangen.

Der Schlitz im einen Spannflansch verläuft vorzugsweise in radialer Richtung und ist an seinem radial äußeren Ende offen. Die Schwenkachse des Gewindeelements verläuft dementsprechend quer zur Richtung des Schlitzes parallel zu einer gedachten Mittelachse der Rohrschelle, also parallel zu einem in die Rohrschelle eingelegten Rohr. Die Schwenkachse des Gewindeelements ist im Bereich eines Übergangs vom einen Spannflansch in den Schellenring vorgesehen.

Um das Verschwenken der Spannschraube beim Schließen der Rohrschelle zu unterstützen, weist der eine Spannflansch bei einer Ausgestaltung der Erfindung einen Abweiser auf, der schräg oder geschwungen radial nach außen vom anderen Spannflansch weg verläuft. Mit diesem Abweiser drückt der eine Spannflansch beim Schließen des Schellenrings den Schraubenkopf radial nach außen und verschwenkt dadurch die Spannschraube gegen die Federkraft der gummielastischen Einlage, bis der Schraubenkopf den einen Spannflansch überwunden hat und durch die Federkraft der Einlage in den Schlitz des einen Spannflansches hineinverschwenkt wird.

Vorzugsweise ist der Schellenring der erfindungsgemäßen Rohrschelle zweistückig mit zwei gelenkig miteinander verbundenen Schellenbügeln ausgebildet. Er weist ein Befestigungselement, beispielsweise eine am Schellenring angeschweißte Mutter oder einen Gewindebolzen, zum Anbringen an einer Wand, Decke oder dgl. auf.

Die Erfindung wird nachfolgend anhand eines in der Zeichnung dargestellten Ausführungsbeispiels näher erläutert. Es zeigen:
- Figur 1: eine erfindungsgemäße Rohrschelle in Seitenansicht;
- Figur 2: einen Querschnitt einer gummielastischen Einlage der in Figur 1 dargestellten Rohrschelle; und
- Figur 3: eine vergrößerte Darstellung einer Einzelheit gemäß Pfeil III in Figur 1 in Schnittdarstellung.

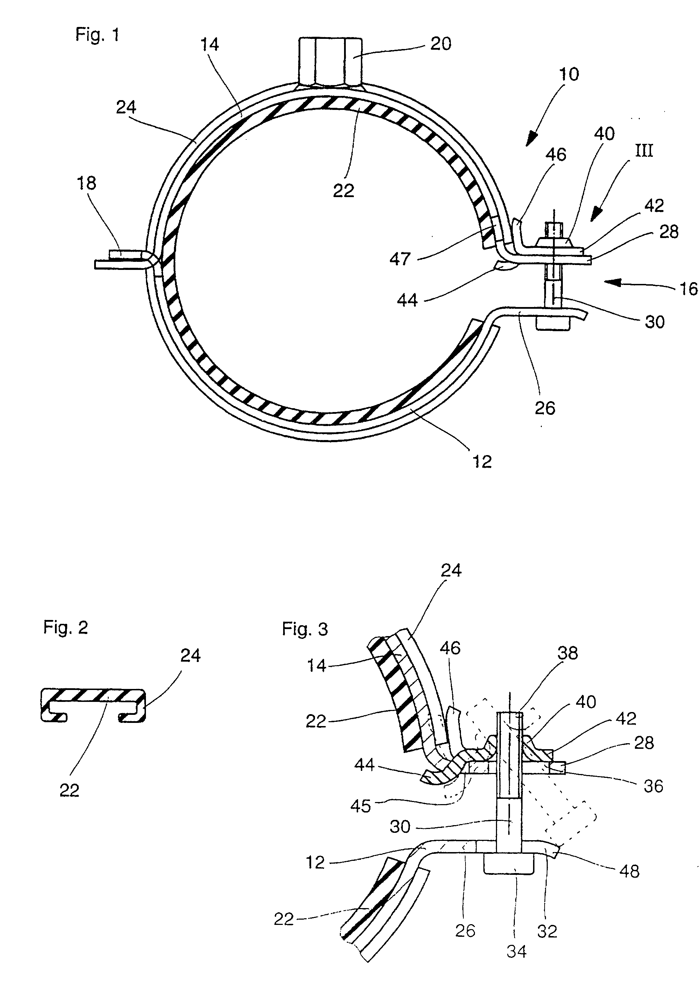

Die in Figur 1 dargestellte, erfindungsgemäße Rohrschelle 10 weist einen Schellenring mit einem ersten Schellenbügel 12 und einem zweiten Schellenbügel 14 auf, die beide jeweils etwas weniger als einen Halbkreisbogen bilden. An einer Stelle ihres Umfangs weist die Rohrschelle 10 eine Öffnung 16 zum Einlegen eines nicht dargestellten Rohres auf. Der Öffnung 16 gegenüber sind die beiden Schellenbügel 12, 14 gelenkig miteinander verbunden, um die Rohrschelle 10 öffnen und das Rohr einlegen zu können. Zur gelenkigen Verbindung weist der erste Schellenbügel 12 eine in Draufsicht T-förmige Zunge 18 auf, die in ansich bekannter Weise eine in der Zeichnung nicht sichtbare Ausstanzung des zweiten Schellenbügels 14 durchgreift.

Beide Schellenbügel 12, 14 sind Blechstanz- und Biegeteile. Etwa in der Mitte des Halbkreisbogens den der zweite Schellenbügel 14 bildet ist eine Mutter 20 zur Befestigung der Rohrschelle 10 an einer Decke oder einer Wand angeschweißt. Auf einer Innenseite der Rohrschelle 10 ist eine gummielastische Einlage 22 angebracht, die sich durchgehend über beide Schellenbügel 12, 14 erstreckt. Zu ihrer Befestigung an der erfindungsgemäßen Rohrschelle 10 weist die in Figur 2 im Querschnitt dargestellte Einlage 22 C-förmige Seitenränder 24 auf, die Seitenränder der den Schellenring bildenden Schellenbügel 12, 14 umgreifen. Der klaren Darstellung wegen ist in Figur 1 der dem Betrachter zugewandte C-förmige Seitenrand 24 der Einlage 22 weggeschnitten.

Beiderseits der Öffnung 16 zum Einlegen eines Rohres weisen die Schellenbügel 12, 14 mit ihnen einstückige Spannflansche 26, 28 auf, die in etwa radial nach außen und näherungsweise parallel zueinander von der Rohrschelle 10 abstehen und von einer Spannschraube 30 durchgriffen werden (Fig. 3). Mit ihrem kopfseitigen Schaftende durchgreift die Spannschraube 30 einen Schlitz 32, der radial verlaufend und außen offen in dem einen Spannflansch 26 angebracht ist, der mit dem ersten Schellenbügel 12 einstückig ist. Ein Kopf 34 der Spannschraube 30 liegt auf einer dem anderen Spannflansch 28 abgewandten Seite des einen Spannflanschs 26 auf.

Ein dem Kopf 34 abgewandtes, ein Gewinde tragendes Schaftende 38 der Spannschraube 30 ragt durch ein Langloch 36 hindurch, das radial verlaufend im anderen Spannflansch 28 angebracht ist, der mit dem zweiten Schellenbügel 14 einstückig ist. Das gewindetragende Schaftende 38 ist lose in ein Innengewinde eingeschraubt, das in einem Kragen 40 eines Gewindeblechs 42 angebracht ist. Das Gewindeblech 42 bildet ein Gewindeelement, es ist auf einer dem einen Spannflansch 26 abgewandten Seite des anderen Spannflanschs 28 angeordnet. Das Gewindeblech 42 ist schwenkbar im Bereich eines Übergangs vom anderen Spannflansch 28 in den zweiten Schellenbügel 14 angebracht. Dazu weist das Gewindeblech 42 eine mit ihm einstückige, gekröpfte Zunge 44 auf, die ein Stanzloch 45 durchgreift, welches radial innerhalb des Langlochs 36 im Bereich eines Übergangs des anderen Spannflanschs 28 in den zweiten Schellenbügel 14 im zweiten Schellenbügel 14 angebracht ist. Durch Verschwenken läßt sich das Gewindeblech 42 in die in Figur 3 mit Strichlinien dargestellte Lage vom anderen Spannflansch 28 abheben.

An seiner dem zweiten Schellenbügel 14 zugewandten Seite weist das Gewindeblech 42 an seinen beiden Seiten Fortsätze 46 auf. Die Fortsätze 46 sind von mit dem Gewindeblech 42 einstückigen Zungen gebildet, die in etwa in Umfangsrichtung des zweiten Schellenbügels 14 abstehend vom Gewindeblech 42 umgebogen sind. Die Fortsätze 46 befinden sich außerhalb des zweiten Schellenbügels 14, sie liegen auf Außenseiten der C-förmigen Seitenränder 24 der gummielastischen Einlage 22 an. Die C-förmigen Seitenränder 24 der gummielastischen Einlage 22 bilden Federelemente, welche die Fortsätze 46 des Gewindeblechs 42 radial nach außen und dadurch das Gewindeblech 42 in Anlage an die dem einen Spannflansch 26 abgewandte Seite des anderen Spannflansches 28 drücken.

Im Bereich der Fortsätze 46 weisen die Seitenränder des zweiten Schellenbügels 14 ausgestanzte Ausnehmungen 47 auf (Figur 1), die Freiräume bilden, in welche die C-förmigen Seitenränder 24 der gummielastischen Einlage 22 beim Verschwenken des Gewindeblechs 42 elastisch hineinverformt werden. Bei entsprechend großen Schwenkwinkel des Gewindeblechs 42 gelangen auch die Fortsätze 46 in die Aussparungen 47 hinein.

Zur Befestigung eines nicht dargestellten Rohres an einer Wand oder Decke wird die erfindungsgemäße Rohrschelle 10 mittels ihrer Mutter 20 an der Wand oder Decke befestigt. Die Rohrschelle 10 ist zunächst geöffnet, d.h. der Kopf 34 der Spannschraube 30 befindet sich auf einer dem anderen Spannflansch 28 zugewandten Seite des einen Spannflansches 26, die Spannschraube 30 durchgreift den mit dem einseitig offenen Schlitz 32 versehenen einen Spannflansch 26 nicht. Die Schellenbügel 12, 14 lassen sich zum Einlegen des Rohres auseinanderschwenken. Nach Einlegen des Rohres werden die beiden Schellenbügel 12, 14 zusammengedrückt. Dabei nähern sich die Spannflansche 26, 28 einander, der Kopf 34 der Spannschraube 30 stößt gegen den einen Spannflansch 26. Dieser Spannflansch 26, der infolge der gegeneinander verschwenkten Schellenbügel 12, 14 in einem sich radial nach außen öffnenden Winkel zum anderen Spannflansch 28 steht, drückt den Kopf 34 radial nach außen und verschwenkt dadurch die Spannschraube 30 radial nach außen (Strichlinien in Figur 3).

Um das Verschwenken der Spannschraube 30 zu erleichtern, ist ein radial äußeres Ende des einen Spannflansches 26 als Abweiser 48 schräg vom anderen Spannflansch 28 weggebogen. Zusammen mit der Spannschraube 30 verschwenkt das Gewindeblech 42, das schwenkbar am zweiten Schellenbügel 14 angebracht ist. Dabei bietet das Langloch 36 im anderen Spannflansch 28 ausreichend Freiraum für die Schwenkbewegung der Spannschraube 30. Zusammen mit dem Gewindebelch 42 schwenken dessen beide Fortsätze 46 in radialer Richtung nach innen und verformen dabei die C-förmigen Seitenränder 24 der gummielastischen Einlage 22, auf deren Außenseiten die Fortsätze 46 anliegen. Sobald der Kopf 34 der Spannschraube 30 das äußere Ende des einen Spannflansches 26 überwunden hat, drücken die C-förmigen Ränder der gummielastischen Einlage 22 die Fortsätze 46 radial nach außen und dadurch das Gewindeblech 42 in Anlage an den anderen Spannflansch 28. Die Spannschraube 30 wird in den außen offenen Schlitz 32 im einen Spannflansch 26 hineingedrückt, so daß der Kopf 34 der Spannschraube 30 diesen Spannflansch 26 übergreift, wie in Figuren 1 und 3 dargestellt. Die erfindungsgemäße Rohrschelle 10 ist dadurch provisorisch geschlossen, sie hält das in sie eingelegte Rohr.

Durch Anziehen der Spannschraube 30 wird das Rohr in der Rohrschelle 10 festgespannt. Die erfindungsgemäße Rohrschelle 10 läßt sich ohne Werkzeug provisorisch schließen. Dazu werden lediglich die beiden Schellenbügel 12, 14 gegeneinandergedrückt. Die gummielastische Einlage 22, deren C-förmige Seitenränder 24 das Gewindeblech 42 über dessen Fortsätze 46 in Anlage an den anderen Spannflansch 28 drücken, sorgt in jeder Lage der Rohrschelle 10 dafür, daß die Spannschraube 30 in den einseitig offenen Schlitz 32 im einen Spannflansch 26 verschwenkt, sobald der Kopf 34 der Spannschraube 30 das äußere Ende dieses Spannflansches 26 überwunden hat.

## Patentansprüche

1. Rohrschelle mit einem Schellenring, der ein in die Rohrschelle eingelegtes Rohr umgreift und der eine Öffnung zum Einlegen des Rohres an einer Stelle seines Umfangs aufweist, wobei der Schellenring zwei in etwa radial nach außen stehende Spannflansche (26, 28) beiderseits der Öffnung aufweist, die mit einer sie durchgreifenden Spannschraube (30) zusammenspannbar sind, wobei einer der beiden Spannflansche (26), der sich auf der Seite eines Kopfes der Spannschraube (30) befindet, einen einseitig offenen Schlitz (32) und der andere Spannflansch (28) ein Durchsteckloch (36) aufweist, das von einem gewindetragenden Schaftende (38) der Spannschraube (30) durchgriffen wird und das in Richtung parallel zum einseitig offenen Schlitz (32) eine Abmessung aufweist, die ein Verschwenken der Spannschraube (30) aus dem Schlitz (32) heraus und in den Schlitz (32) hinein ermöglicht, mit einem Gewindeelement (42), in das die Spannschraube (30) eingeschraubt ist, das einen abgewinkelten Fortsatz (46) aufweist und das schwenkbar auf einer dem einen Spannflansch (26) abgewandten Seite des anderen Spannflansches (28) angebracht ist, und mit einer gummielastischen Einlage (22) auf einer Innenseite des Schellenrings, die einen auf einer Außenseite des Schellenrings befindlichen Abschnitt (24) an einem dem anderen Spannflansch (28) zugewandten Ende aufweist, **dadurch gekennzeichnet,** daß der Fortsatz (46) auf einer Außenseite des auf der Außenseite des Schellenrings (12, 14) befindlichen Abschnitts (24) der Einlage (22) anliegt.

2. Rohrschelle nach Anspruch 1, **dadurch gekennzeichnet,** daß die Einlage (22) C-förmige Seitenränder (24) aufweist, mit der sie die Seitenränder des Schellenrings (12, 14) umgreift, wobei der Fortsatz (46) des Gewindeelements (42) auf einer Außenseite eines der C-förmigen Seitenränder (24) der Einlage (22) anliegt.

3. Rohrschelle nach Anspruch 1, **dadurch gekennzeichnet,** daß der Schellenring (12, 14) eine Ausnehmung (47) im Bereich des Fortsatzes (46) des Gewindeelements (42) aufweist.

4. Rohrschelle nach Anspruch 1, **dadurch gekennzeichnet,** daß der einseitig offene Schlitz (32) in etwa in radialer Richtung verläuft und an einem radial äußeren Ende offen ist.

5. Rohrschelle nach Anspruch 1, **dadurch gekennzeichnet,** daß das Gewindeelement (42) um eine zu einer Mittelachse der Rohrschelle (10) parallele Schwenkachse, die sich in einem Übergangsbereich vom Schellenring (12, 14) zum anderen Spannflansch (28) befindet, schwenkbar ist.

6. Rohrschelle nach Anspruch 1, **dadurch gekennzeichnet,** daß der eine Spannflansch (26) einen Abweiser (48) aufweist, der vom anderen Spannflansch (28) weg verläuft, gegen den der Kopf (34) der Spannschraube (30) gelangt, wenn die beiden Spannflansche (26, 28) zum Schließen der geöffneten Rohrschelle (10) zusammengedrückt werden und der den Kopf (34) in Richtung des offenen Endes des Schlitzes (32) im einen Spannflansch (26) drückt.

7. Rohrschelle nach Anspruch 1, **dadurch gekennzeichnet,** daß der Schellenring zwei Schellenbügel (12, 14) aufweist, die gelenkig miteinander verbunden sind.

8. Rohrschelle nach Anspruch 1, **dadurch gekennzeichnet,** daß der Schellenring (12, 14) eine Befestigungseinrichtung (20) zum Anbringen an einer Wand, Decke oder dgl. aufweist.

## Claims

1. Pipe clip having a clip ring, which surrounds a pipe inserted into the pipe clip and has at a point on its circumference an opening for insertion of the pipe, the clip ring having two clamping flanges (26, 28) that project approximately radially outwards on both sides of the opening, which clamping flanges (26, 28) are arranged to be clamped together by means of a clamping screw (30) that passes through them, and one of the two clamping flanges (26) which is located beside a head of the clamping screw (30) having a slot (32) open to one side and the other clamping flange (28) having a through-hole (36) through which a threaded shank end (38) of the clamping screw (30) passes and which has, in a direction parallel to the slot (32) open to one side, a dimension that allows the clamping screw (30) to pivot out of and into the slot (32), having a threaded element (42) into which the clamping screw is screwed and which has an angled extension piece (46) and which is pivotally mounted on the other clamping flange (28) on a face remote from the first clamping flange (26), and having an elastomeric insert (22) on an inner face of the clip ring, which insert has a step (24) on an outer face of the clip ring at an end facing the other clamping flange (28), **characterized in that** the extension piece (46) rests against an outer face of the step (24) of the insert (22) located on the outer face of the clip ring (12, 14).

2. Pipe clip according to claim 1, **characterized in that** the insert (22) has C-shaped side edges (24), by means of which it grips around the side edges of the clip ring (12, 14), the extension piece (46) of the threaded element (42) resting against an outer face of one of the C-shaped side edges (24) of the insert (22).

3. Pipe clip according to claim 1, **characterized in that** the clip ring (12, 14) has an opening (47) in the region of the extension piece (46) of the threaded element (42).

4. Pipe clip according to claim 1, **characterized in that** the slot (32) open to one side extends in an approximately radial direction and is open at a radially outer end.

5. Pipe clip according to claim 1, **characterized in that** the threaded element (42) is arranged to be pivoted about a pivot axis that is parallel to a central axis of the pipe clip (10) and located in a region of transition from the clip ring (12, 14) to the other clamping flange (28).

6. Pipe clip according to claim 1, **characterized in that** the first clamping flange (26) has a deflector (48), which extends away from the other clamping flange (28) and which comes into contact with the head (34) of the clamping screw (30) when the two clamping flanges (26, 28) are being pressed together for closing the open pipe clip (10) and which presses the head (34) towards the open end of the slot (32) in the first clamping flange (26).

7. Pipe clip according to claim 1, **characterized in that** the clip ring has two clip members (12, 14), which have an articulated connection to one another.

8. Pipe clip according to claim 1, **characterized in that** the clip ring (12, 14) has a fastening device (20) for attachment to a wall, ceiling or the like.

## Revendications

1. Collier de serrage pour tuyaux muni d'une bague de serrage qui entoure un tuyau inséré dans le collier de serrage pour tuyaux et qui présente à un endroit de son pourtour une ouverture pour la mise en place du tuyau, la bague de serrage présentant deux brides de serrage (26, 28) s'étendant vers l'extérieur à peu près radialement des deux côtés de l'ouverture, ces brides pouvant être serrées ensemble à l'aide d'une vis de serrage (30) les traversant, l'une des deux brides de serrage (26) qui se trouve sur le côté d'une tête de la vis de serrage (30) présentant une fente (32) ouverte d'un côté et l'autre bride de serrage (28) présentant un trou de passage (36), qui est traversé par un bout de tige (38) fileté de la vis de serrage (30) et qui, en direction parallèle à la fente (32) ouverte d'un côté, présente une dimension qui permet de faire pivoter la vis de serrage (30) en la sortant hors de la fente (32) et en la rentrant dans la fente (32), muni d'un élément fileté (42), dans lequel est vissée la vis de serrage (30), cet élément fileté présentant un prolongement (46) courbé et étant fixé de manière pivotante sur l'un des côtés de l'une des brides de serrage (28) opposé à l'autre bride de serrage (26), et muni d'une garniture (22) en caoutchouc élastique sur un côté intérieur de la bague de serrage, cette garniture présentant une section (24) située sur un côté extérieur de la bague de serrage sur une extrémité tournée vers l'autre bride de serrage (28), **caractérisé en ce que** le prolongement (46) est adjacent à un côté extérieur de la section (24) de la garniture (22) se trouvant sur le côté extérieur de la bague de serrage (12, 14).

2. Collier de serrage pour tuyaux selon la revendication 1, **caractérisé en ce que** la garniture (22) présente des bords latéraux (24) en forme de C avec lesquels elle entoure les bords latéraux de la bague de serrage (12, 14), le prolongement (46) de l'élément fileté (42) étant adjacent à un côté extérieur de l'un des bords latéraux (24) en forme de C de la garniture (22).

3. Collier de serrage pour tuyaux selon la revendication 1, **caractérisé en ce que** la bague de serrage (12, 14) présente un évidement (47) dans la partie du prolongement (46) de l'élément fileté (42).

4. Collier de serrage pour tuyaux selon la revendication 1, **caractérisé en ce que** la fente (32) ouverte d'un côté s'étend en direction à peu près radiale et est ouverte à l'une des extrémités radiales extérieures.

5. Collier de serrage pour tuyaux selon la revendication 1, **caractérisé en ce que** l'élément fileté (42) est pivotant autour d'un axe de pivotement parallèle à un axe médian du collier de serrage pour tuyaux (10), axe de pivotement qui se trouve dans une partie de passage de la bague de serrage (12, 14) vers l'autre bride de serrage (28).

6. Collier de serrage pour tuyaux selon la revendication 1, b l'une des brides de serrage (26) présente un butoir (48) dirigé à l'encontre de l'autre bride de serrage (28), arrive contre la tête de la vis de serrage (30) lorsque les deux brides de serrage (26, 28) sont serrées ensemble pour la fermeture du collier de serrage pour tuyaux (10) ouvert et qui pousse la tête (34) en direction de l'extrémité ouverte de la fente (32) dans une bride de serrage (26).

7. Collier de serrage pour tuyaux selon la revendication 1, **caractérisé en ce que** la bague de serrage présente deux étriers de serrage (12, 14) qui sont raccordés entre eux de manière articulée.

8. Collier de serrage pour tuyaux selon la revendication 1, **caractérisé en ce que** la bague de serrage (12, 14) présente un dispositif de fixation (20) pour l'application sur un mur, un plafond ou sur une paroi similaire.
